# EUROPEAN PATENT APPLICATION

(11) **EP 1 069 527 A1**
(43) Date of publication of application: **17.01.2001**
(21) Application number: 99830406.7
(22) Date of filing: 25.06.1999
(51) Int. Cl.: G06K 19/08, G06K 19/04

(54) **Card provided with digital memories and process for manufacturing of same**

(71) Applicant: International Consulting S.r.l., 20059 Vimercate (MI) (IT)
(72) Inventor: Perego, Luciano, 20050 Mezzago (MI) (IT)
(74) Representative: Tansini, Elio Fabrizio

(57) **Abstract**

It is provided a card of standardized shape comprising a portion (2) defining an optical memory and a region (4) supplied with a semiconductor memory. Also provided is a process for manufacturing a card provided with digital memories consisting in arranging a first flat support (5) having a perimetral edge (5a) corresponding to the standardized rectangular shape of the card and provided with a semiconductor memory (4), arranging a second flat support (6) provided with an optical memory (2), and coupling the two supports (5, 6) with each other in an irremovable manner so as to dispose the memories on opposite reading faces of the card.

## Description

The present invention relates to a card provided with digital memories and a process for manufacturing of same.

It is known that there are cards of standardized rectangular shape, such as credit cards or telephone cards for example, commercially identified by the name of "smart cards" that into their structure integrate a semiconductor or electronic memory which is embodied in silicon microchips following the integrated circuit technology.

It is also known that optical memories of the type known on the market as compact discs under the abbreviations CD ROM and DVD (Digital Versatile Disc) are usually shaped in the form of a disc, having a standardized diameter of 120 or 80 mm, the outer circumferential edge of which enables centering in appropriate circular recesses usually provided in extractable trays of the reading units equipped with a laser head.

Recently proposed has also been use of cards of standardized form, of the type for example employed for accomplishing credit cards, telephone cards and the like, as a medium for optical data memories.

Embodiments of these cards are described in patent applications JP 4040586 and WO 99/00765. These known cards have a central hole, similar to that arranged in normal compact discs, to be operatively engaged by a rotation-actuating device arranged in a laser beam reading unit of the type commonly employed for compact disc reading. Formed around said central hole is the optical memory consisting of coded data recorded and distributed over an area in the form of an annulus, the outer edge of which is substantially tangent to the major sides of the card.

As in normal optical discs, a correct positioning of the card is required in the recessed housing having a diameter of 80 mm, in the extractable tray of the reading unit.

For the purpose, centering means projects from the card face intended for resting on the extractable tray being part of the reading unit, which centering means is adapted to abut against a circular edge of a recessed housing arranged in the tray itself, with an 80 mm diameter.

Under this situation, the technical task underlying the present invention is to devise a card of standardized shape capable of improving operation and flexibility of use both of the cards of the "smart card" type, i.e. provided with digital microchip memories, and of the cards provided with a digital optical memory.

Within the scope of this technical task it is an important aim of the invention to devise a process for manufacturing a card provided with digital memories of simple and cheap execution.

The technical task mentioned and the aims specified are substantially achieved by a card of standardized shape comprising the features recited in the characterizing part of claim 1.

It is also an object of the invention to devise a process for manufacturing a card provided with digital memories which is characterized in that it comprises the steps set forth in claim 15.

Description of two preferred but non exclusive embodiments of a card in accordance with the invention is now given, by way of non-limiting example and illustrated in the accompanying drawings, in which:
- Fig. 1 is a perspective bottom view of a first embodiment of the card in accordance with the invention;
- Fig. 2 is a perspective top view of a tray being part of a reading unit for optical discs into which the subject card can be operatively inserted;
- Fig. 3 is a perspective view of a second embodiment of the card;
- Fig. 4 is a side view of the card shown in Fig. 3.

With reference to the drawings, a card of standardized shape provided with digital memories in accordance with the present invention has been generally identified by reference numeral 1.

Card 1 comprises a first portion in the form of an annulus defining an optical memory 2 arranged to be read by a reading unit for optical discs (not shown), of the type commonly employed for reading compact discs and/or DVD's.

The optical memory 2 can be already provided with digital data or arranged to receive it through a usual laser beam writing unit for compact discs or DVD's.

A through hole 3 adapted to be operatively engaged by a rotation-actuating device being part of said reading unit for optical discs is formed concentrically of said optical memory 2.

Card 1 also comprises a region supplied with a semiconductor or microchip memory 4, disposed on the same card at a standardized position and adapted to enable interfacing with a usual reading unit for cards of the type commercially known under the name of "smart cards".

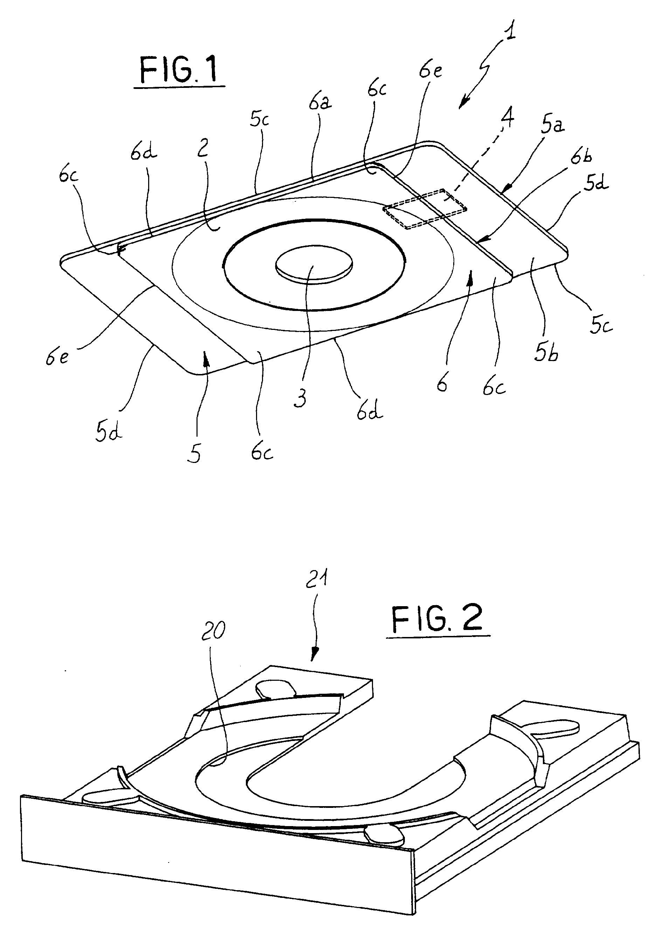

In a first embodiment, shown in Fig. 1, the card in accordance with the invention comprises a first flat support 5 having a substantially rectangular perimetral edge 5a corresponding to the perimetral extension of card 1 which, in turn, has a rectangular form of standardized sizes. Disposed in the first flat support 5 is the region incorporating the semiconductor memory 4. Card 1 further comprises a second flat support 6 defining the portion in which the optical memory 2 is disposed. The flat supports 5 and 6 are coupled with each other in an irremovable manner, by gluing for example, at respective coupling faces 5b and 6a so that the semiconductor memory 4 and optical memory 2 are readable from opposite reading faces of card 1 facing externally thereof, respectively. Both flat supports 5 and 6 have respective through openings in register with each other, so as to form said through hole 3.

The second flat support 6 is delimited by an outline 6b at least partly internal to the perimetral edge 5a of the first support 5 so as to form centering reliefs 6c in the card that project from the coupling face 5b of the first support 5 itself and arranged to interact with a housing 20 in the form of a circular recess present in an extractable tray 21 of an optical reading unit (Fig. 2).

Advantageously, the outline 6b of the second support 6 has a substantially rectangular shape of a width equal to the minor sides 5d of the first support 5 and is located at a centered position relative to the first support. In more detail, the second flat support 6 has two major sides 6d in alignment with the major sides 5c of the first support, and two minor sides 6e parallel to the minor sides 5d of the first support and symmetrically set back relative thereto.

The major sides 6d and minor sides 6e of the second support 6 are joined to each other by connection arcs 6c mutually spaced apart in pairs on the diagonal lines of the second support, to an extent corresponding to the diameter of the circular recess 20 of said tray 21 of the reading unit, equal to 80 mm for example, so as to define said centering reliefs of card 1 at the four corners exhibited by the second support 6.

Preferably, the first flat support 5 is made up of a card of the "smart card" type and the second support 6 is made up of a layer of plastic material with a thickness of 0.6 mm in which the optical memory 2 is embodied, supplied or to be supplied with optical data to be read by a reading unit for DVD's.

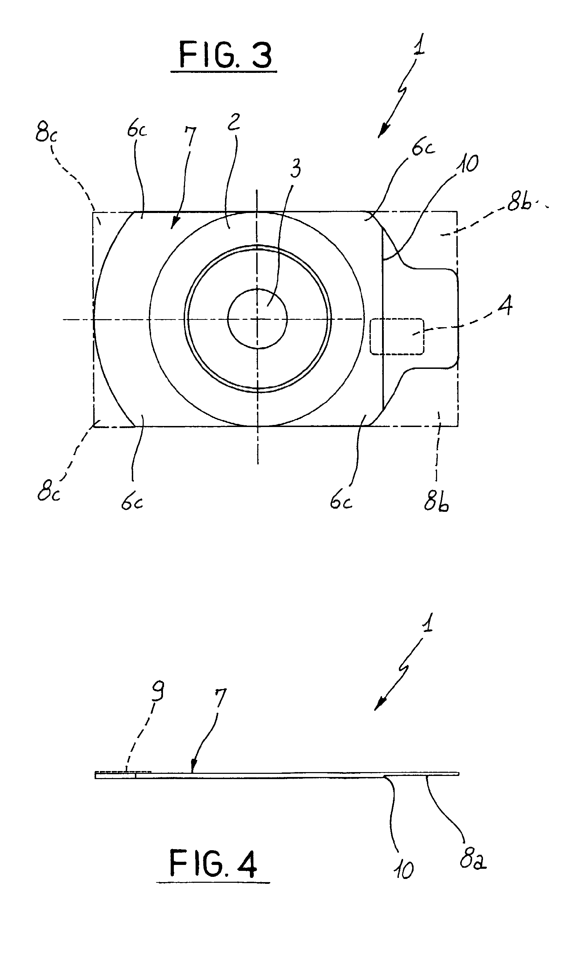

In a second embodiment shown in Figs. 3 and 4, card 1 is made up of a single flat support 7 in which both the portion defining the optical memory 2 and the region supplied with a semiconductor memory 4 are arranged. In order to prevent said semiconductor memory 4, necessarily disposed at a standardized and unmodifiable position internally of the perimetral extension of the card, from interfering with the optical memory 2 by its being superposed thereon, the circumferential extension of the optical memory 2, and consequently the through hole 3 concentric therewith, are provided to be offset relative to the geometric centre of card 1, along the longitudinal centre line of the flat support 7. In this way, practically, the semiconductor memory 4 is advantageously placed completely external to the outer circumferential edge of the optical memory 2.

In this second embodiment as well the semiconductor and optical memories 4 and 2 are readable from respectively opposite reading faces of card 1.

Advantageously, formed in the flat support 7 is one or more lightening hollows 8a, 8b, 8c and/or one or more weight-increasing reliefs 9 aiming at giving card 1 a centre of gravity concentric with hole 3, i.e. with the circumferential extension of the optical memory 2, so as to eliminate undesired dynamic unbalances during rotation of card 1 in the unit intended for reading and/or writing of the optical memory 2.

In more detail, a first lightening hollow 8a formed in the thickness of the flat support 7 close to the semiconductor memory 4 is preferably provided, as clearly shown in Fig. 3. Advantageously, the presence of the first hollow 8a causes a difference in height, or step 10, to be defined in the corresponding face of the flat support 7, which step, together with the perimetral extension of the remaining portion of the flat support 7 which is not concerned with the first lightening hollow itself, forms the centering reliefs 6c adapted to facilitate a correct positioning of card 1 in the unit intended for reading and/or writing of the optical memory 2.

As clearly shown in Fig. 2, also provided may be second lightening hollows 8b symmetrically disposed relative to the longitudinal centre line of the flat support 7, close to the semiconductor memory 4, as well as third lightening hollows 8c, also symmetrically disposed relative to the longitudinal centre line of the flat support 7 at an opposite position with respect to the second hollows 8b. The third hollows 8c are preferably such shaped that they give the edge of the flat support 7 a curved profile concentric with the through hole 3.

A possible weight-increasing relief 9 may be disposed on the flat support 7, on the opposite side relative to the first lightening hollow 8a, as shown in chain line in Fig. 4.

Manufacturing of card 1 in the embodiment shown in Fig. 1 takes place by a new process being an integral part of the present invention as well.

In this process a first flat support 5 having a perimetral edge 5a corresponding to the standardized rectangular shape of the card is provided to be conveniently arranged. This first support 5 has a semiconductor memory 4 to be operatively interfaced with a reading unit for cards of the microchip type, also known as "smart cards".

Arrangement of a second flat support 6 is also provided, which support has an optical memory 2 adapted to be read by a reading unit for optical discs such as compact discs or, preferably, DVD's.

Then, in accordance with the process, said flat supports 5, 6 are coupled with each other in an irremovable manner, by gluing for example, at respective coupling faces 5b, 6a, so that the two digital memories 2, 4 are read from opposite reading faces of card 1.

Advantageously, arrangement of the second flat support 6 can be carried out by a first preparation step of an optical disc following the injection moulding technologies usually employed in manufacturing optical discs, preferably DVD's, and a second step of cutting the optical disc following an outline 6b adapted to enable it to be seated in a housing or circular recess 20 arranged in an extractable tray 21 of the reading unit and adapted to be at least partly contained internally of the perimetral edge 5a of the first support 5, so that portions of said outline 6b define centering reliefs 6c of card 1 in said circular housing.

The invention achieves important advantages.

First of all it enables two distinct digital memories usually employed for performing different functions to be combined on a single card. In this manner, the supplied performance being the same, the number of cards to be at the user's disposal is halved.

In addition, it is to point out that the process for manufacturing a card in accordance with the invention can be based on use of equipment and devices usually already provided for manufacturing cards of the "smart card" type and optical discs, to which very simple and widespread cutting or die-cutting apparatus are only to be added.

It will be also recognized that, due to the possibility of utilizing the DVD manufacturing technologies, the subject card may be provided with an optical memory having a much greater capacity as compared with conventional optical-memory cards.

## Claims

1. A card provided with digital memories, characterized in that it comprises:
- a portion defining an optical memory (2) arranged to be read by a reading unit for optical discs, and
- a region supplied with a semiconductor memory (4) to be operatively interfaced with a reading unit for microchip cards.

2. A card as claimed in claim 1, characterized in that it comprises:
- a first flat support (5) having a substantially rectangular perimetral edge (5a) corresponding to the perimetral extension of said card (1) and comprising said region supplied with a semiconductor memory (4), and
- a second flat support (6) coupled with the first support (5) in an irremovable manner at respective coupling faces (6a, 5b) and provided with said optical memory (2).

3. A card as claimed in claim 2, wherein said semiconductor (4) and optical (2) memories are readable from opposite reading faces of the card.

4. A card as claimed in claim 2, wherein said supports (5, 6) have respective through openings in register with each other so as to form a single hole (3) to be operatively engaged by rotation-actuating means being part of said reading unit for optical discs.

5. A card as claimed in claim 2, characterized in that said second flat support (6) has an outline (6b) at least partly internal to said perimetral edge (5a) of the first support (5) and adapted to form centering reliefs (6c) arranged to interact with a housing (20) present in an extractable tray (21) of said reading unit to determine a predetermined positioning of the card (1) in the tray.

6. A card as claimed in claim 5, characterized in that said outline (6a) of the second flat support (6) has a substantially rectangular shape of a width corresponding to the minor sides (5d) of the first support (5) and is placed at a centered position relative to the first support itself.

7. A card as claimed in claim 6, characterized in that said second flat support (6) has:
- two major sides (6d) substantially coincident with the major sides (5c) of said first flat support (5),
- two minor sides (6e) parallel to the minor sides (5d) of the first flat support (5) and symmetrically set back relative to the same.

8. A card as claimed in claim 7, characterized in that each centering relief (6c) is defined by a connection arc disposed, along the outline (6a) of the second flat support (6), between one of said major sides (6d) and one of said minor sides (6e), said connection arcs being mutually spaced apart in opposite pairs on diagonal lines of said second support (6) to an extent corresponding to the diameter of a circular recess constituting said housing present in the tray of the reading unit.

9. A card as claimed in claim 2, characterized in that said first support (5) and second support (6) are integrally joined to each other by gluing.

10. A card as claimed in claim 2, characterized in that said optical memory (2) is supplied or adapted to be supplied with optical data readable by a reading unit for DVD's.

11. A card as claimed in claim 2, characterized in that said first flat support (5) consists of a card of the type commercially known as "smart card".

12. A card as claimed in claim 1, characterized in that it comprises a single flat support (7) carrying said optical memory (2) and semiconductor memory (4), said optical memory (2) being disposed according to a circumferential extension that is offset relative to the geometric centre of the card (1), and said semiconductor memory (4) being disposed externally of an outer circumferential edge of the optical memory (2).

13. A card as claimed in claim 12, characterized in that it comprises at least one lightening hollow (8a, 8b, 8c) to give the card (1) a centre of gravity concentric with said hole (3).

14. A card as claimed in claim 12, characterized in that it further comprises at least one weight-increasing relief (9) to give the card a centre of gravity concentric with said hole (3).

15. A process for manufacturing a card provided with digital memories characterized in that it comprises the following steps:
- arranging a first flat support (5) having a substantially rectangular perimetral edge (5a) corresponding to the perimetral extension of said card (1) and provided with a semiconductor memory (4) to be operatively interfaced with a reading unit for microchip cards;
- arranging a second flat support (6) provided with an optical memory (2) arranged to be read by a reading unit for optical discs and coupling said flat supports (5, 6) with each other in an irremovable manner at respective coupling faces.

16. A process as claimed in claim 15, characterized in that arrangement of said second flat support (6) comprises the following steps:
- preparing a disc provided with said optical memory (2),
- cutting said disc following an outline enabling it to be seated in a housing present in an extractable tray of a reading unit and adapted to be at least partly contained internally of the perimetral-edge (5a) extension of the first support (5).
